# EUROPÄISCHE PATENTSCHRIFT

(11) **EP 2 087 210 B1**
(45) Veröffentlichungstag und Bekanntmachung des Hinweises auf die Patenterteilung: **22.08.2018**
(21) Anmeldenummer: 07815194.1
(22) Anmeldetag: 23.11.2007
(51) Int. Cl.: F01K 25/00, F01C 1/077, F02B 53/02

(54) **VERFAHREN ZUR UMWANDLUNG VON WÄRMEENERGIE UND DREHFLÜGELKOLBENMOTOR**
METHOD FOR CONVERTING HEAT ENERGY AND ROTARY VANE PISTON MOTOR
PROCÉDÉ DE TRANSFORMATION D'ÉNERGIE THERMIQUE ET MOTEUR À PISTONS À PALETTES

(30) Priorität: 23.11.2006 AT 19522006; 27.11.2006 AT 19642006
(43) Veröffentlichungstag der Anmeldung: 12.08.2009
(73) Patentinhaber: Mahle König Kommanditgesellschaft GmbH & Co, 6830 Rankweil (AT)
(72) Erfinder: LANGNER, Karlheinz, 2393 Sittendorf bei Wien (AT); MÄTHNER, Manfred, 74211 Leingarten (DE)
(74) Vertreter: Wildhack & Jellinek
(86) Internationale Anmeldenummer: PCT/AT2007/000530
(87) Internationale Veröffentlichungsnummer: WO 2008/061271

(56) Entgegenhaltungen:
- EP-A2- 0 082 671
- WO-A-2005/045197
- DE-A1- 10 008 123
- DE-A1- 19 740 133
- DE-A1-102005 020 221
- US-A- 3 830 062
- US-A1- 2003 000 213
- US-A1- 2006 010 872
- US-B1- 6 964 168
- US-B1- 7 047 744

## Beschreibung

Die Erfindung betrifft ein Verfahren gemäß dem Oberbegriff des Patentanspruches 1. Des weiteren betrifft die Erfindung Drehflügelkolbenmotoren gemäß dem Oberbegriff des Patentanspruches 11 bzw. gemäß dem Oberbegriff des Patentanspruches 17. Beide Ausführungsformen von Drehflügelkolbenmotoren sind zur Durchführung des erfindungsgemäßen Verfahrens geeignet. Des weiteren können die Merkmale des jeweils einen Drehflügelkolbenmotors bei dem jeweils anderen Drehflügelkolbenmotor verwirklicht werden.

Drehflügelkolbenmotoren sind vom Prinzip und Aufbau her bekannt, es handelt sich dabei um Motoren, die Kreiskolbenmotoren entsprechen, so wie sie beispielsweise aus der DE 197 53 134 A1 oder US3830062 bekannt sind. Vergleichbare Motoren, die allerdings mit Zündung eines Gasstoff-Luftgemisches arbeiten, sind beispielsweise aus der DE 198 14 742 C1 bekannt. Auch aus der DE 197 40 133 A1 ist ein Kreiskolbenmotor bekannt, der vom Aufbau her im wesentlichen einem Drehflügelkolbenmotor entspricht, so wie er für die Durchführung des erfindungsgemäßen Verfahrens eingesetzt werden bzw. als Vorbild für die erfindungsgemäßen Drehflügelkolbenmotoren gelten kann.

Aus diesen genannten Druckschriften sind auch Einrichtungen bekannt, die bewirkten, dass der Schwingbewegung der Kolben des Drehflügelkolbenmotors eine Kreisbewegung überlagert wird, insbesondere eine Getriebeeinheit mit Unrundrädern, die Schwingbewegungen in eine Kreisbewegung umwandeln, sodass an einer Abtriebswelle die entsprechende Motorkraft abgenommen werden kann.

Die Funktion derartiger Drehflügelkolbenmotoren ist im wesentlichen den genannten Druckschriften zu entnehmen bzw. dem Fachmann wohlbekannt.

Ziel der Erfindung ist es, ein einfach durchführbares Verfahren mit hohem Wirkungsgrad zu erstellen, mit dem minderwertige Wärmeenergie in höherwertige Energie, z.B. elektrischen Strom, umgewandelt werden kann.

Dieses Ziel wird bei einem Verfahren der eingangs genannten Art mit dem im Kennzeichen des Anspruches 1 angeführten Merkmalen erreicht.

Es ist von Vorteil für den Wirkungsgrad, wenn das Arbeitsfluid nach Verlassen des Drehflügelkolbenmotors nach geleisteter Arbeit gekühlt und verflüssigt wird und nach der erfolgten Kondensation über einen Wärmetauscher zur neuerlichen Erhitzung und Verdampfung gepumpt wird und als expandiertes Gas unter entsprechendem Druck wieder dem Drehflügelkolbenmotor zur Arbeitsleistung zugeführt wird.

Eine Ausführungsform eines erfindungsgemäßen Drehflügelkolbenmotors ist mit dem Kennzeichen des Patentanspruches 8 charakterisiert. Eine andere, insbesondere vergleichbare, Ausführungsform ist mit den im Kennzeichen des Anspruches 12 angeführten Merkmalen charakterisiert.

Beide Ausführungsformen sind konstruktiv einfach aufgebaut und gewährleisten einen hohen Wirkungsgrad, auch unter unterschiedlichen Betriebsbedingungen.

Eine einfache Regelung des Verfahrens bzw. der Drehflügelkolbenmotoren wird mit den Merkmalen des Anspruches 2 ermöglicht. Durch die druckabhängige Regelung des vor dem Drehflügelkolbenmotor gelegenen Ventils kann eine exakte Regelung des Betriebs des Motors erfolgen, womit der Wirkungsgrad verbessert wird.

Der Einsatz des genannten Arbeitsfluides Solkane ES36 oder Solkatherm SES36 ist vor Vorteil, da dieses Arbeitsfluid die Einstellung von Verfahrensparametern erlaubt, die für die Erhöhung des Wirkungsgrades von Vorteil sind. Es wird jedoch bemerkt, dass andere Arbeitsfluide, für die ebenfalls die erfindungsgemäß vorgesehenen Parameter eingestellt werden können, in gleicher Weise eingesetzt werden können. Von Vorteil ist es, wenn organische Arbeitsfluide eingesetzt werden, und zwar in nicht brennbarer und in nicht giftiger Form. Bei Einhaltung der Parameter gemäß Anspruchs 1 kann ein guter Wirkungsgrad erzielt werden. Eine Verbesserung der Energiebilanz wird erreicht, wenn die Merkmale der Ansprüche 5 und 6 verwirklicht werden.

Bei der erfindungsgemäßen Vorgangsweise wird durch die Merkmale, dass ein auf die Kolben des Motors einwirkendes Arbeitsfluid nach Arbeitsleistung verflüssigt wird und die Heizeinrichtung ausgelegt ist, das verflüssigte Arbeitsfluid zu verdampfen, und zwischen der Kühleinheit und der Heizeinrichtung eine Pumpeneinrichtung zum Fördern des verflüssigten Arbeitsfluids vorgesehen ist, erreicht, dass zum Betreiben der Kühleinrichtung und zum Betreiben der Heizeinrichtung vorhandene Temperaturniveaus bzw. Energiequellen und -senken nutzbar sind, insbesondere um die zum Betreiben der Pumpeneinrichtung mit dem Ziel des Aufbaus eines vorgegebenen Arbeitsfluid-Druckes stromabwärts der Heizeinrichtung notwendige Energie zu minimieren. Die Energieminimierung wird bei der erfindungsgemäßen Vorgangsweise dadurch erreicht, dass die Pumpeneinrichtung mit dem verflüssigten Arbeitsfluid eine Flüssigkeit fördert, und aufgrund der hohen Dichte des verflüssigten Arbeitsfluids im Gegensatz zu einem gasförmigen Arbeitsfluid ein ausreichend hoher Arbeitsfluid-Durchsatz auch bei kleiner Dimensionierung gegeben ist. Stromabwärts der Heizeinrichtung ist dann nach einem Verdampfen des Arbeitsfluids ein ausreichend hoher Arbeitsfluiddruck gegeben, um den Motor mit zwei in einem Zylinder gegeneinander drehbar gelagerten Kolben zu betreiben.

Sofern zwischen der Kühleinheit und der Pumpeneinrichtung ein Flüssigkeitsspeicher vorgesehen ist, der ein Flüssigkeitsreservoir bereithält, das ausreichend groß bemessen ist, um die Leistung der Pumpeneinrichtung an einen jeweils aktuellen Bedarf anzupassen, kann unterschiedlichen Betriebssituationen Rechnung getragen werden.

Dazu trägt auch bei, wenn gemäß einer bevorzugten Ausführungsform der erfindungsgemäßen Motoren vorgesehen ist, dass zwischen der Heizeinrichtung und dem Motor ein Gasspeicher vorgesehen ist. Von Vorteil kann es dabei sein, wenn in dessen Innerem eine Pufferwand zum Abscheiden von Flüssigkeitsresten vorgesehen ist, die in dem Gasspeicher auffangbar und ansammelbar sind und über einen gesonderten Kreislauf an die Heizeinrichtung bzw. in den Arbeitsfluid-Kreislauf rückleitbar sind.

Gemäß einer wichtigen bevorzugten Ausführungsform der erfindungsgemäßen Motoren ist vorgesehen, dass eine erste Heizeinrichtung und eine zweite Heizeinrichtung in Reihe hintereinander geschaltet sind, wobei die erste Heizeinrichtung das verflüssigte Arbeitsfluid auf ein erstes Niveau aufheizt und die zweite Heizeinrichtung das verflüssigte bzw. flüssige Arbeitsfluid auf ein gegenüber dem ersten Niveau angehobenes zweites Niveau aufheizt. Ein Erwärmen des Arbeitsfluids in zwei oder mehr sukzessiven Schritten bewirkt dabei zum einen eine gute Handhabbarkeit von Gasgemischen mit leicht unterschiedlichen Siedepunkten und zum anderen eine effektive und energiearme Einleitung von Wärme in das Arbeitsfluid. Eine der beiden Heizeinrichtungen kann dabei vorteilhaft von einer mittels eines Sonnenkollektors erwärmten Flüssigkeit beheizt werden, wobei aufgrund der dort vorherrschenden höheren Temperatur insbesondere die zweite Heizeinrichtung geeignet ist, um von einer mittels eines Sonnenkollektors erwärmten Flüssigkeit betrieben zu werden.

In dem Fall, dass zwei Heizeinrichtungen vorgesehen sind, ist der Gasspeicher vorzugsweise mit der ersten Heizreinrichtung gekoppelt. Die Kopplung ist dabei vorzugsweise so geartet, dass in dem Gasspeicher aufgefangenes und über einen gesonderten Kreislauf rückgeleitetes Arbeitsfluid mit Hilfe der ersten Heizeinrichtung einem Verdampfungsvorgang zuführbar ist.

Jedes der genannten einzelnen Merkmale trägt zur Erhöhung des Wirkungsgrades bzw. Verbesserung des Energiehaushaltes und Anpassung des erfindungsgemäßen Verfahrens bzw. der erfindungsgemäßen Drehflügelkolbenmotoren an unterschiedliche Betriebszustände bei.

Im Folgenden wird die Erfindung anhand der Zeichnung beispielsweise näher erläutert. Fig. 1 zeigt schematisch den Arbeitsfluidkreislauf für einen erfindungsgemäßen Drehflügelkolbenmotor. Fig. 2 zeigt schematisch den Motor mit der Getriebeeinheit, mit der die Schwingbewegung der Kolben des Motors in eine Rotationsbewegung umgesetzt wird. Fig. 3 zeigt das Funktionsprinzip eines erfindungsgemäßen Drehflügelkolbenmotors. Fig. 4 zeigt schematisch ein weiteres Funktionsprinzip eines erfindungsgemäßen Drehflügelkolbenmotors. Fig. 5 zeigt eine T-s-Diagramm.

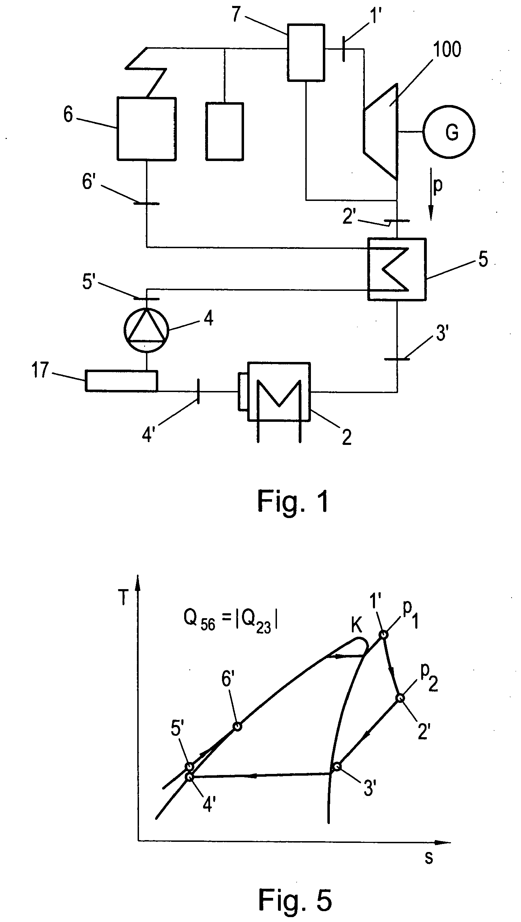

Das erfindungsgemäße Verfahren wird nun anhand des in Fig. 1 schematisch dargestellten Schaltbildes eines erfindungsgemäßen Drehflügelkolbenmotors näher erläutert. Ein Drehflügelkolbenmotor 100 wird mit einem Arbeitsfluid betrieben, wobei das aus dem Drehflügelkolbenmotor 100 austretende Arbeitsfluid, wie mit dem Pfeil P angedeutet, einem Kondensator bzw. einer Kühleinheit 2 zugeführt und dort verflüssigt wird. Im verflüssigten Zustand wird das Arbeitsfluid gegebenenfalls über einen Sammler bzw. Sammelbehälter 17 einer Druckpumpe 4 bzw. einem Kompressor zugeführt, von dem das Arbeitsfluid über einen Wärmetauscher 6 geführt oder einem weiteren Wärmetauscher 6 zugeführt ist. Diese Zufuhr des Arbeitsfluids von der Druckpumpe 4 zum weiteren Wärmetauscher 6 kann allenfalls über einen Wärmetauscher 5 erfolgen, der in der Leitung des Arbeitsfluids zwischen dem Drehflügelkolbenmotor 100 und dem Kondensator bzw. der Kühleinheit 2 zwischengeschaltet ist. In bzw. mit diesem Wärmetauscher 5 kann dem aus dem Drehflügelkolbenmotor 100 austretenden Arbeitsfluid noch weitere Wärme entnommen werden und die Tätigkeit des Wärmetauschers 6 unterstützt werden. Der weitere Wärmetauscher 6 erhitzt das Arbeitsfluid weiter und führt das verdampfte und expandierte Arbeitsgas den Zylindern bzw. den Kammern des Drehflügelkolbenmotors zu, womit die flügelartig ausgebildeten Kolben 1, 2 des Drehflügelkolbenmotors 100 in Bewegung gesetzt werden. Der Drehflügelkolbenmotor 100 ist über eine Getriebeeinheit 110 an einen Generator G angeschlossen.

Zwischen dem weiteren Wärmetauscher 6 und dem Drehflügelkolbenmotor 100 wird ein Ventil 7, insbesondere ein regelbares Sensorventil, angeordnet, das vom Druck des Arbeitsfluids nach Austritt des Arbeitsfluids aus dem Drehflügelkolbenmotor 100 gesteuert wird. Erfindungsgemäß wird als Arbeitsfluid Solkane ES36 oder Solkatherm SES36 oder ein vergleichbares organisches Arbeitsfluid eingesetzt, das für den Menschen ungiftig und nicht entflammbar ist. Wesentlich für das erfindungsgemäße Verfahren ist es, dass das Arbeitsfluid im Kondensator bzw. in der Kühleinheit 2 verflüssigt wird und nach entsprechender Abkühlung im weiteren Wärmetauscher 6 wieder verdampft und expandiert wird, um die entsprechenden Entnalpien nutzen zu können. Erfindungsgemäß werden gegebenenfalls mit dem zwischen dem Wärmetauscher 6 und dem Drehflügelkolbenmotor 100 gelegenen Ventil 7, der Druck und die Temperatur des Arbeitsfluids gemäß Anspruch 1 eingestellt. Erfindungsgemäß ist vorgesehen, dass ein Arbeitsfluid verwendet wird, mit dem die in dem Anspruch 1 aufgeführten Druck- und Temperaturwerte erreichbar sind, diese das Arbeitsfluid im weiteren Wärmetauscher (6) erhitzt wird, vorzugsweise mit Sonnenergie bzw. mit Energie aus Sonnenkollektoren bzw. aus einer Solaranlage erhitzten bzw. mit Energie von Heißwasserquellen oder mit Abwärme.

Zweckmäßig ist es, wenn ein Arbeitsfluid eingesetzt wird, dessen Siedepunkt (bei 1 bar) zwischen -150°C bis 100°C, vorzugsweise zwischen 30 bis 50°C, liegt, insbesondere zwischen 30 bis 40 °C,
dessen kritische Temperatur zwischen 0°C und 500°C, vorzugsweise zwischen 100°C und 300°C, liegt, insbesondere zwischen 150 bis 200°C,
dessen kritischer Druck zwischen 10 bar und 300 bar, vorzugsweise zwischen 20 und 50 bar, insbesondere zwischen 25 bis 35 bar,
liegt oder dass ein Arbeitsfluid eingesetzt wird, dessen
Siedepunkt (bei 1 bar) zwischen -75°C bis 100°C, vorzugsweise zwischen -30 bis 50°C, liegt, insbesondere zwischen -20 bis 40 °C,
dessen kritische Temperatur zwischen 0°C und 320°C, vorzugsweise zwischen 100°C und 250°C, liegt, insbesondere zwischen 150 bis 200°C,
dessen kritischer Druck zwischen 10 bar und 110 bar, vorzugsweise zwischen 20 und 50 bar, insbesondere zwischen 25 bis 35 bar,
liegt.

Von Vorteil ist es, wenn das Arbeitsfluid im weiteren Wärmetauscher 6 erhitzt wird, vorzugsweise mit Sonnenergie bzw. mit Energie aus Sonnenkollektoren bzw. aus einer Solaranlage bzw. mit Energie von Heißwasserquellen oder mit Abwärme. Damit kann die Energiebilanz der erfindungsgemäßen Vorgangsweise verbessert werden. Das kalte Kondensat kann somit mit wirtschaftlich zur Verfügung gestellter Energie erwärmt werden.

Von Vorteil ist es, wenn die Druckpumpe 4 mit elektrischer Energie angetrieben wird, die von einem von der Abtriebswelle 44 des Drehflügelkolbenmotors 100 angetriebenen Generator G abgenommen wird. Damit kann die Druckpumpe 4 mit wirtschaftlich erzeugtem Strom angetrieben werden.

Zweckmäßig ist es, wenn der Generator G mit Arbeitsfluid gekühlt wird, das dem Arbeitsfluidkreislauf nach der Druckpumpe 4 und vor einem der Wärmetauscher 5 oder 6 entnommen wird, und in den Arbeitsfluidkreislauf zwischen den Wärmetauscher 5 und dem weiteren Wärmetauscher 6 oder vor dem Wärmetauscher 5 zurückgeführt wird.
Mit dieser Vorgangsweise wird die Wärmebilanz der erfindungsgemäßen Vorgangsweise verbessert bzw. mit geringem Aufwand eine entsprechende Kühlung des Generators bewirkt.

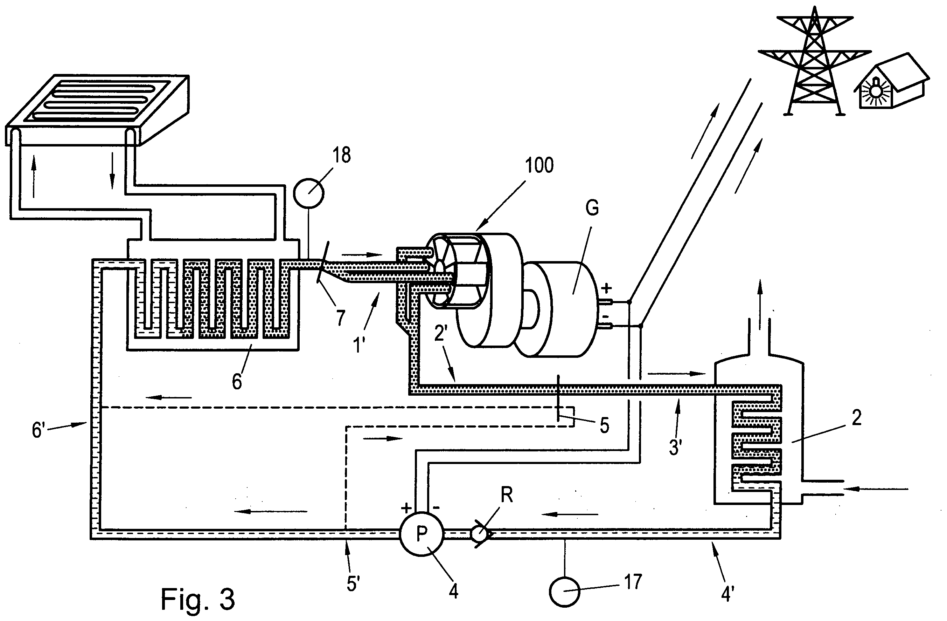

Fig. 3 zeigt schematisch die erfindungsgemäße Vorgangsweise in vergleichbarer Form, wie sie in Fig. 1 dargestellt ist. Man erkennt, dass alternativ zur direkten Weiterleitung des flüssigen Kondensats von der Druckpumpe 4 zum weiteren Wärmetauscher bzw. zum Erhitzer 6, in der Leitung für das den Drehflügelkolbenmotor 100 verlassende Arbeitsfluid ein Wärmetauscher 5 eingeschaltet sein kann, mit dem dem den Drehflügelkolbenmotor 100 verlassenden Arbeitsfluid weitere Wärme entzogen wird. Zwischen der Kühleinheit 2 und der Druckpumpe 4 kann ein Sammelbehälter bzw. Flüssigkeitsspeicher 17 für kaltes Kondensat vorgesehen sein. Zwischen dem Erhitzer bzw. weiteren Verdampfer 6 und dem Ventil 7 und/oder dem Drehflügelkolbenmotor 100 kann ein Gasspeicher 18 für das heiße verdampfte Arbeitsfluid angeordnet sein. Die Speicher dienen dazu, entsprechende Reserven für sich verändernden Betriebszustände zur Verfügung zu stellen. Zwischen dem Sammler 17 und der Druckpumpe 4 kann ein Rückschlagventil R angeordnet sein.

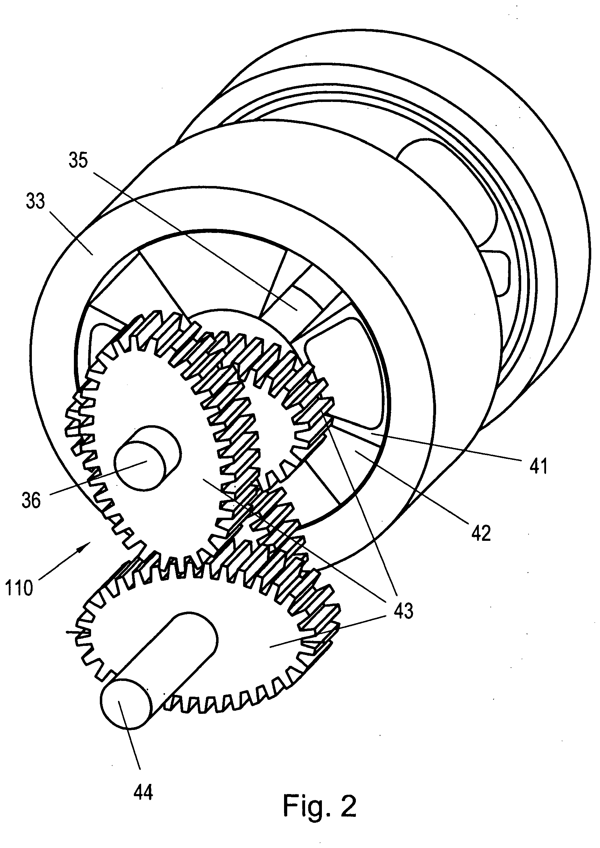

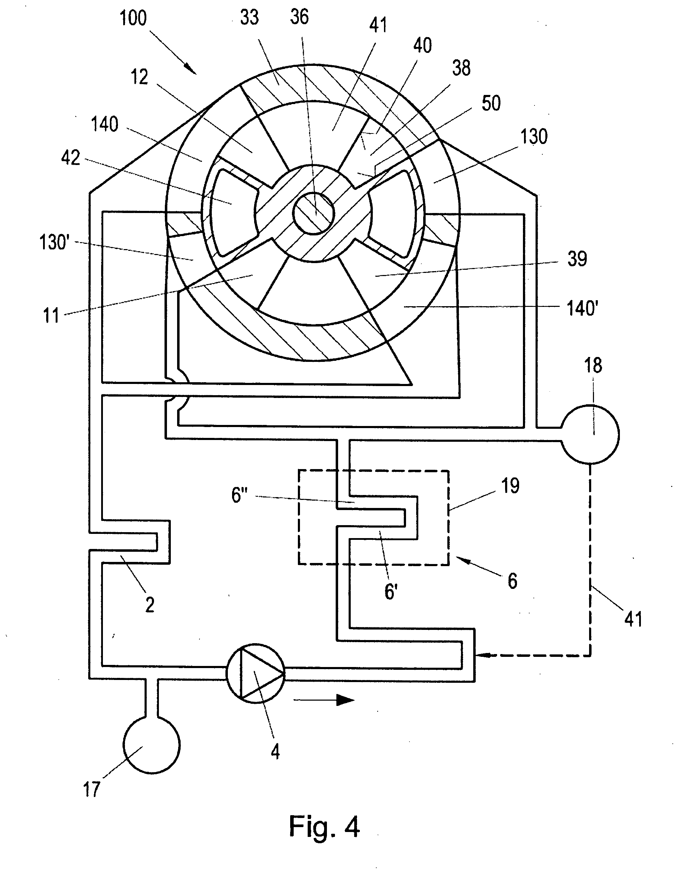

Der in den Fig. 2 und 4 dargestellte erfindungsgemäße Drehflügelkolbenmotor 100 umfasst zwei in einem Zylinder 33 gegeneinander drehbar gelagerte Kolben 1, 2, deren Symmetrieachsen 4 kollinar mit der Symmetrieachse des Zylinders 33 verlaufen. Eine Mehrzahl wirksamer Hubräume 38, 39, 11, 12 ist dabei zwischen jeweils zwei radialen Grenzflächen 40, 50 der beiden jeweiligen Kolben 41, 42 ausgebildet, die bei Betrieb des Drehflügelkolbenmotors 100 mit Bezug aufeinander eine Schwingbewegung ausführen. Eine Einrichtung 110 ist vorgesehen, die bewirkt, dass der Schwingbewegung eine Kreisbewegung beider Kolben 41, 42 überlagert wird.

Die Einrichtung 110 erhält eine Welle 36, die die Einrichtung 110 antreibt. Ferner sind die Kühleinheit 2 und die Heizeinrichtung 6 in ein Rohrsystem eingebaut, durch das Einlassschlitze 130, 130' und Auslassschlitze 140, 140' der von den Kolben 41, 42 begrenzten Hubräume des Zylinders 33 miteinander verbunden sind.

Die Kühleinrichtung 2 ist ausgelegt, um ein auf die Kolben 41, 42 einwirkendes Arbeitsfluid zu verflüssigen, und die Heizeinrichtung 6 ist ausgelegt, um das verflüssigte Arbeitsfluid zu verdampfen, wobei zwischen der Kühleinrichtung 2 und der Heizeinrichtung 6 die Druckpumpe 4 zum Fördern des verflüssigten Arbeitsfluids vorgesehen ist.

Zwischen der Kühleinheit 2 und der Pumpe 4 ist ein Flüssigkeitsspeicher 17 vorgesehen, der ein Flüssigkeitsreservoir bereithält, das ausreichend groß bemessen ist, um die Leistung der Pumpe 4 an einen jeweils aktuellen Bedarf anzupassen.

Ferner ist zwischen der Heizeinrichtung 6 und dem Zylinder 33 ein Gasspeicher 18 vorgesehen. In dessen Innenraum kann eine Pufferwand zum Abscheiden von Flüssigkeitsresten vorgesehen sein, die in dem Gasspeicher 18 auffangbar und ansammelbar sind und über einen gesonderten Kreislauf 41 an die Heizreinrichtung 6 rückleitbar sind.

Die Heizeinrichtung 6 kann eine erste Heizeinrichtung 6' und eine zweite Heizeinrichtung 6" umfassen, die in Reihe hintereinander geschaltet sind, wobei die erste Heizeinrichtung das verflüssigte bzw. noch flüssige Treibgas auf ein erstes Niveau aufheizt und die zweite Heizeinrichtung das verflüssigte Treibgas auf ein gegenüber dem ersten Niveau angehobenes zweites Niveau aufheizt. Die zweite Heizeinrichtung kann dabei von einer mittels eines Sonnenkollektors erwärmten Flüssigkeit betrieben werden.

Der Gasspeicher 18 kann mit der ersten Heizeinrichtung in der Weise gekoppelt sein, dass in dem Gasspeicher 18 aufgefangenes und über den gesonderten Kreislauf rückgeleitetes Treibgas mit Hilfe der ersten Heizeinrichtung einem Verdampfungsvorgang zuführbar ist.

Der erfindungsgemäße Drehflügelkolbenmotor 100 umfasst gemäß Fig. 2 und 4 zwei gegeneinander drehbar gelagerte Kolben 41, 42, die flügelartig ausgebildet sind. Die beiden Kolben 41, 42 sind über spezielle Unrundräder 43 mit einer dritten Welle bzw. einer Abtriebswelle 44 verbunden, die ein Drehmoment abgibt. Durch die Anordnung der Unrundräder entsteht bei Drehung der dritten Welle eine Relativbewegung der Kolben zueinander. Dadurch ergeben sich im Zylinder 33 zwangsläufig vier Kammern, deren jeweiliges Volumen sich von fast Null auf einen Maximalwert periodisch ändert. Jeweils zwei gegenüberliegende Kammern ergeben ein Arbeitsvolumen, so dass pro Umdrehung vier Arbeitstakte entstehen. Es wird ein organisches Arbeitsfluid verwendet, das für die erforderlichen Arbeitstemperaturen geeignet ist und unter Zuführung entsprechender Prozesswärme das verdampften Arbeitsfluids entwickelt. Aufgrund von vier Arbeitshüben pro Umdrehung wird ein ruhiger Lauf mit gutem Gleichförmigkeitsgrad bei mechanischer Einfachheit erreicht, eine geringe Anzahl von Teilen und eine hohe Leistung bei geringer Drehzahl ergibt eine lange Lebensdauer.

Vorzugsweise gibt der Motor die Leistung an einen Generator G ab, dem eine elektronische Regelung nachgeschaltet ist, so dass immer nur soviel Leistung in das Netz eingespeist wird, dass die Drehzahl des Motors annähernd konstant bleibt. Auch ist eine Leistungsabgabe in Form eines mechanischen Antriebs möglich.

Fig. 2 ist insbesondere die Einrichtung zu entnehmen, mit der die Schwingbewegung der Kolben 41, 42 über entsprechend geformte unrunde Zahnräder 43 in an sich bekannter Weise in eine Kreisbewegung gewandelt werden kann, die an der Abtriebswelle 44 abgenommen werden kann.

In Fig. 5 ist ein T-s-Diagramm angeführt, in dem die entsprechenden Temperatur-Enthalpien-Zusammenhänge für einen erfindungsgemäßen Arbeitszyklus aufgelistet sind. Die Lage der Arbeitspunkte gemäß Fig. 5 sind in Fig. 1 mit denselben Bezugsziffern 1', 2', 3', 4', 5' und 6' bezeichnet.

Der Dampf des Arbeitsfluids ist bei 1' auf vorgegebenen Druck p1 und vorgegebener Temperatur T1 erhitzt bzw. überhitzt und leistet entsprechend Arbeit durch Betätigung der Kolben 41, 42 im Zylinder 33. Der Aufbau des Drehflügelkolbenmotors bzw. die Anbringung der Einlassschlitze in Relation zur Stellung der Kolben ist wohl bekannt bzw. kann vom Fachmann auf den jeweiligen Anwendungszweck bzw. die jeweils vorliegenden Verfahrensparameter eingestellt werden.

Die in den Arbeitspunkten 1', 2', 3', 4', 5' und 6' vorliegenden Drücke und Temperaturen sind den Ansprüchen 3 und 4 zu entnehmen.

Ein vorteilhafterweise eingesetztes Arbeitsfluid besitzt die chemische Summenformel C₄H₅F₅/CF₃-O-(CF₂-CF(CF₃)-O)ₙ-(CF₂-O)ₘ-CF₃, wobei m und n ganze Zahlen sind, bzw. stellt eine Mischung (65 : 35) von 1,1,1,3,3-Pentafluorbutan und 1,1,2,3,3,3-Hexafluoro-1-Propen, insbesondere oxidiert und polymerisiert, dar. Weitere ersetzbare umweltverträgliche Arbeitsfluide sind CF₃CH₂CF₂CH₃ (Perfluorpolyäther) und/oder CH₂FCF₃ und/oder CF₃CHFCF₃ und/oder CHF₂CH₂CF₃ und/oder CF₃CH₂CF₂CH₃.

Die Systempumpe 4 für den ORC-Kreislauf ist in der Drehzahl und der Förderleistung regelbar.

Damit wird in Abhängigkeit zu der zur Verfügung stehende Wärmemenge die erzeugte Dampfmenge geregelt und somit die Leistung des Dampfmotors gesteigert oder gemindert.

Folgende Parameter haben einen Einfluss auf die Regelung der Pumpe:
- zur Verfügung stehende Wärmemenge am Verdampfer
- zur Verfügung stehende Kühlleistung am Kondensator
- abgegebene Leistung des Generators und
- Drehzahl des Generators.

Als Pumpentyp kann eine Zahnrad- aber auch eine Kreiselpumpe verwendet werden.

Die Drehzahl des Dampfmotors wird durch Einstellung der Parameter Druck und/oder Temperatur eingeregelt auf 300 bis 8000 U/min, vorzugsweise 450 bis 4000 U/min.

## Patentansprüche

1. Verfahren zur Umwandlung von Wärmeenergie in höherwertige Energie mit einem Drehflügelkolbenmotor (100) mit dem ein Arbeitskreislauf für ein Arbeitsfluid verbunden ist, **dadurch gekennzeichnet,**
- **dass** der Drehflügelkolbenmotor (100) zwei auf einer Welle drehbar gegeneinander gelagerte flügelartig ausgebildete Kolben (41, 42) aufweist, von denen das erzeugte Drehmoment, gegebenenfalls über eine Getriebeeinheit (110) mit Unrundrädern (43), an einer Antriebswelle (44) abgenommen wird,
- **dass** das aus dem Drehflügelkolbenmotor (100) austretende Arbeitsfluid in einer Kühleinheit bzw. in einem Kondensator (2) verflüssigt wird und im verflüssigten Zustand, gegebenenfalls über einen vorzugsweise mit einem Filter versehenen Sammler (17), einer Druckpumpe (4), und von dieser über einem der Kühleinheit (2) vorgeordneten Wärmetauscher (5) zur Wärmeaufnahme, einem weiteren Wärmetauscher (6) zur Erhitzung bzw. Verdampfung und von diesem weiteren Wärmetauscher (6), gegebenenfalls über ein regelbares Ventil, insbesondere Sensorventil (7), in expandierter Form den Kammern des Drehflügelkolbenmotors (100) zur Bewegung der Kolben (41, 42) zugeführt wird, und
- **dass** das Arbeitsfluid im Kondensator (2) verflüssigt und nachfolgend im weiteren Wärmetauscher (6) wieder verdampft wird, wobei vorgesehen ist,
- **dass** als Arbeitsfluid Solkane ES36 oder Solkatherm SES36 oder ein vergleichbares organisches Arbeitsfluid eingesetzt wird, das im Kondensator (2) bzw. der Kühleinheit verflüssigt und nachfolgend im weiteren Wärmetauscher (6) wieder verdampft wird,
- **dass** der Druck des Arbeitsfluides unmittelbar vor (bei 1') dem Drehflügelkolbenmotor (100) auf 3 bar bis 10 bar, insbesondere auf 6 bar bis 10 bar,
unmittelbar nach (bei 2') dem Drehflügelkolbenmotor (100) auf 0,4 bar bis 0,8 bar,
unmittelbar vor (bei 3') dem Kondensator (2) auf 0,4 bar bis 0,8 bar,
unmittelbar vor (bei 4') der Druckpumpe (4)auf 0,4 bar bis 0,8 bar,
unmittelbar nach (bei 5') der Druckpumpe (4) auf 2 bar bis 100 bar, vorzugsweise 3 bar bis 10 bar, insbesondere auf 6 bar bis 10 bar,
unmittelbar nach (bei 6') dem Wärmetauscher (5) auf 2 bar bis 100 bar, vorzugsweise 3 bar bis 10 bar, insbesondere auf 0,4 bar bis 0,8 bar,
unmittelbar nach (bei 1') dem weiteren Wärmetauscher (6) auf 3 bar bis 10 bar, insbesondere auf 6 bar bis 10 bar,
eingestellt wird
und
- **dass** die Temperatur des Arbeitsfluides
unmittelbar vor (bei 1') dem Drehflügelkolbenmotor (100) auf 60°C bis 180°C, insbesondere auf 100 bis 140°C,
unmittelbar nach (bei 2') dem Drehflügelkolbenmotor (1) auf 0°C bis 70°C, insbesondere auf 20 bis 40°C,
unmittelbar vor (bei 3') dem Kondensator (2) auf 20 bis 40°C,
unmittelbar vor (bei 4') der Druckpumpe (4) auf 0°C bis 70°C, insbesondere auf 20 bis 40°C,
unmittelbar nach (bei 5') der Druckpumpe (4) auf 0°C bis 70°C, unmittelbar nach (bei 6') dem Wärmetauscher (5) auf 0°C bis 70°C, insbesondere auf 20 bis 40°C,
unmittelbar nach (bei 1') dem weiteren Wärmetauscher (6) auf 60°C bis 180°C, insbesondere auf 100 bis 140°C,
eingestellt wird.

2. Verfahren nach Anspruch 1, **dadurch gekennzeichnet, dass** das Arbeitsfluid mit dem zwischen dem Wärmetauscher (6) und dem Drehflügelkolbenmotor (100) gelegenen Ventil (7) geregelt bzw. dosiert entspannt wird, und zwar in Abhängigkeit vom Druck des Arbeitsfluides nach dem Drehflügelkolbenmotor (100).

3. Verfahren nach Anspruch 1 oder 2, **dadurch gekennzeichnet, dass** das eingesetzte Arbeitsfluid die chemische Summenformel C₄H₅F₅/CF₃-O-(CF₂-CF(CF₃)-O)ₙ-(CF₂-O)ₘ-CF₃ besitzt, wobei m und n ganze Zahlen sind, und/oder eine Mischung (65 : 35) von 1,1,1,3,3-Pentafluorbutan und 1,1,2,3,3,3-Hexafluoro-1-Propen, insbesondere oxidiert und polymerisiert, darstellt,

4. Verfahren nach einem der Ansprüche 1 bis 3, **dadurch gekennzeichnet, dass** als Arbeitsfluid CF₃CH₂CF₂CH₃ (Perfluorpolyäther) und/oder CH₂FCF₃ und/oder CF₃CHFCF₃ und/oder CHF₂CH₂CF₃ und/oder CF₃CH₂CF₂CH₃ eingesetzt wird.

5. Verfahren nach einem der Ansprüche 1 bis 4, **dadurch gekennzeichnet, dass** das Arbeitsfluid im weiteren Wärmetauscher (6) erhitzt wird, vorzugsweise mit Sonnenergie und/oder mit Energie aus Sonnenkollektoren und/oder aus einer Solaranlage und/oder mit Energie von Heißwasserquellen oder mit Abwärme.

6. Verfahren nach einem der Ansprüche 1 bis 5, **dadurch gekennzeichnet, dass** die Druckpumpe (4) mit elektrischer Energie angetrieben wird, die von einem von der Abtriebswelle (4) des Drehflügelkolbenmotors (100) angetriebenen Generator (G) abgenommen wird und/oder dass der Generator (G) mit Arbeitsfluid gekühlt wird, das dem Arbeitsfluidkreislauf nach der Druckpumpe (4) und vor einem der Wärmetauscher (5 oder 6) entnommen wird, und in den Arbeitsfluidkreislauf zwischen den Wärmetauscher (5) und dem weiteren Wärmetauscher (6) oder vor dem Wärmetauscher (5) zurückgeführt wird.

7. Verfahren nach einem der Ansprüche 1 bis 6, **dadurch gekennzeichnet, dass** ein Arbeitsfluid eingesetzt wird, dessen
Siedepunkt (bei 1 bar) zwischen -150°C bis 100°C, vorzugsweise zwischen 30 bis 50°C, liegt, insbesondere zwischen 30 bis 40 °C,
dessen kritische Temperatur zwischen 0°C und 500°C, vorzugsweise zwischen 100°C und 300°C, liegt, insbesondere zwischen 150 bis 200°C,
dessen kritischer Druck zwischen 10 bar und 300 bar, vorzugsweise zwischen 20 und 50 bar, insbesondere zwischen 25 bis 35 bar,
liegt.

8. Drehflügelkolbenmotor mit einem ein Arbeitsfluid enthaltenden Arbeitskreislauf, zur Durchführung des Verfahrens nach einem der Ansprüche 1 bis 7, **dadurch gekennzeichnet,**
- **dass** der Drehflügelkolbenmotor (100) zwei auf einer Welle drehbar gegeneinander gelagerte flügelartig ausgebildete Kolben (41, 42) aufweist, von denen das erzeugte Drehmoment, gegebenenfalls über eine Getriebeeinheit (110) mit Unrundrädern (43) an einer Abtriebswelle (44) abgenommen wird,
- **dass** zur Verflüssigung des aus dem Drehflügelkolbenmotor (100) austretenden Arbeitsfluids ein Kondensator bzw. eine Kühleinheit (2) vorgesehen ist und das Arbeitsfluid im verflüssigten Zustand, gegebenenfalls über einen, vorzugsweise ein Filter aufweisenden Sammler (3) mit einer Druckpumpe (4) über einen dem Kondensator bzw. der Kühleinheit (2) vorgeordneten Wärmetauscher (5) zur Wärmeaufnahme, einem weiteren Wärmetauscher (6) zur Erhitzung bzw. zum Verdampfen und von diesem weiteren Wärmetauscher (6) über ein, gegebenenfalls regelbares Ventil (7), insbesondere Sensorventil, in expandierter Form den Kammern (5, 6) des Drehflügelkolbenmotors (100) zur Bewegung der Kolben (41, 42) zugeführt ist, und
- **dass** gegebenenfalls im Arbeitsfluidkreislauf als Arbeitsfluid Solkane ES36 oder Solkatherm SES36 oder ein vergleichbares Arbeitsfluid zirkuliert ist, das im Kondensator (2) verflüssigt und nachfolgend im weiteren Wärmetauscher (6) wieder verdampft wird, und
- **dass** im Arbeitsfluidkreislauf des Drehflügelkolbenmotors (100) ein Arbeitsfluid geführt ist, dessen
Siedepunkt (bei 1 bar) zwischen -150°C bis 100°C, vorzugsweise zwischen 30 bis 50°C, insbesondere zwischen 30 und 40°C, liegt,
dessen kritische Temperatur zwischen 0°C und 500°C, vorzugsweise zwischen 100°C und 300°C, insbesondere zwischen 150 und 200°C, liegt,
dessen kritischer Druck zwischen 10 bar und 300 bar, vorzugsweise zwischen 20 bar und 50 bar, insbesondere zwischen 25 und 35 bar, liegt oder dass ein Arbeitsfluid eingesetzt wird, dessen Siedepunkt (bei 1 bar) zwischen -75°C bis 100°C, vorzugsweise zwischen -30 bis 50°C, liegt, insbesondere zwischen -20 bis 40 °C,
dessen kritische Temperatur zwischen 0°C und 320°C, vorzugsweise zwischen 100°C und 250°C, liegt, insbesondere zwischen 150 bis 200°C, und
dessen kritischer Druck zwischen 10 bar und 110 bar, vorzugsweise zwischen 20 und 50 bar, insbesondere zwischen 25 bis 35 bar,
liegt.

9. Drehflügelkolbenmotor nach Anspruch 8, **dadurch gekennzeichnet, dass** das Ventil (7), insbesondere Sensorventil, in Abhängigkeit vom Druck des Arbeitsfluides nach dem Drehflügelkolbenmotor (100) gesteuert ist.

10. Drehflügelkolbenmotor nach Anspruch 8 oder 9, **dadurch gekennzeichnet, dass** der weitere Wärmetauscher (6) an Sonnenergiekollektoren und/oder Abwärmequellen angeschlossen ist oder als Sonnenergiekollektor ausgeführt ist.

11. Drehflügelkolbenmotor nach einem der Ansprüche 8 bis 10, **dadurch gekennzeichnet, dass** der Kühlkreislauf des Generators (G) mit Arbeitsfluid gespeist ist, das dem Arbeitsfluidkreislauf über einen nach der Druckpumpe (4) und vor einem der Wärmetauscher (5 oder 6) angeordneten Anschluss entnommen wird, und in den Arbeitsfluidkreislauf an einem Anschluss zwischen dem Wärmetauscher (5) und dem Wärmetauscher (6) oder vor dem Wärmetauscher (5) zurückgeführt ist.

12. Drehflügelkolbenmotor (100) mit zwei in einem Zylinder (33) gegeneinander drehbar gelagerten Kolben (41, 42), deren Symmetrieachsen kollinear mit der Symmetrieachse des Zylinders (33) verlaufen, wobei eine Mehrzahl wirksamer Hubräume (38, 39, 11, 12) zwischen jeweils zwei radialen Grenzflächen (40, 50) der beiden jeweiligen Kolben (41, 42) ausgebildet ist, die bei Betrieb des Motors (1) in Bezug aufeinander eine Schwingbewegung ausführen, wobei eine Einrichtung (110) vorgesehen ist, die bewirkt, dass der Schwingbewegung beiden Kolben (41, 42) der Kreisbewegung überlagert ist, wobei die Einrichtung (110) eine eine Drehkraftabgabeeinrichtung (35, z.B. einem Generator (G) treibende Abtriebswelle (44) enthält, und wobei eine Kühleinheit (2), insbesondere Kondensator, und eine Heizeinrichtung (6), insbesondere Wärmetauscher, in Verbindung mit einem Rohrsystem vorgesehen sind, durch das Einlassschlitze (130, 130') und Auslassschlitze (140, 140') der Hubräume des Zylinders (33) miteinander verbunden sind, zur Durchführung des Verfahrens nach einem der Ansprüche 1 bis 7, **dadurch gekennzeichnet,**
- **dass** die Kühleinheit bzw. der Kondensator (2) ausgelegt ist, um ein auf die Kolben (41, 42) einwirkendes Arbeitsfluid zu verflüssigen und die Heizeinrichtung bzw. der Wärmetauscher (6) ausgelegt ist, um das verflüssigte Treibgas zu verdampfen, und dass zwischen der Kühleinheit (2) und der Heizeinrichtung (6) die Druckpumpe (4) zum Fördern des verflüssigten Arbeitsfluids vorgesehen ist und
- **dass** im Arbeitsfluidkreislauf des Drehflügelkolbenmotors (100) ein Arbeitsfluid geführt ist, dessen
Siedepunkt (bei 1 bar) zwischen -150°C bis 100°C, vorzugsweise zwischen 30 bis 50°C, insbesondere zwischen 30 und 40°C, liegt,
dessen kritische Temperatur zwischen 0°C und 500°C, vorzugsweise zwischen 100°C und 300°C, insbesondere zwischen 150 und 200°C, liegt,
dessen kritischer Druck zwischen 10 bar und 300 bar, vorzugsweise zwischen 20 bar und 50 bar, insbesondere zwischen 25 und 35 bar, liegt.

13. Motor nach einem der Ansprüche 8 bis 12, **dadurch gekennzeichnet, dass** zwischen der Kühleinheit (2) und der Pumpe (4) ein Flüssigkeitsspeicher (17) vorgesehen ist, der ein Flüssigkeits-Reservoir bereithält, das ausreichend groß bemessen ist, um die Leistung der Druckpumpe (4) an eine jeweils aktuellen Bedarf anzupassen und/oder dass zwischen der Heizeinrichtung (6) und dem Zylinder (33) ein Gasspeicher (18) vorgesehen ist, in dessen Innerem gegebenenfalls eine Pufferwand zum Abscheiden von Flüssigkeitsresten vorgesehen ist, die in dem Gasspeicher auffangbar und ansammelbar sind und gegebenenfalls über einen gesonderten Kreislauf an die Heizeinrichtung (6) rückleitbar sind.

14. Motor nach einem der Ansprüche 8 bis 13, **dadurch gekennzeichnet, dass** als Heizeinrichtung (6) eine erste Heizeinrichtung (6') und eine zweite Heizeinrichtung (6") in Reihe hintereinander geschaltet sind, wobei gegebenenfalls die erste Heizeinrichtung (6') des verflüssigte Arbeitsfluid auf ein erstes Temperaturniveau aufheizt und die zweite Heizeinrichtung (6") das insbesondere noch verflüssigte Arbeitsfluid auf ein gegenüber dem ersten Niveau angehobenes zweites Niveau aufheizt, wobei gegebenenfalls eine der beiden Heizeinrichtungen (6', 6") von einer mittels eines Sonnenkollektors erwärmten Flüssigkeit betrieben sind und/oder die zweite Heizeinrichtung (6") von einer mittels eines Sonnenkollektors erwärmten Flüssigkeit betrieben ist und/oder die erste Heizeinrichtung (6') von einer mittels eines Holz-, Öl- oder Gasbrenners erwärmten Flüssigkeit betrieben ist.

15. Motor nach Anspruch 14, **dadurch gekennzeichnet, dass** beide Heizeinrichtungen von einer mittels eines Sonnenkollektors erwärmten Flüssigkeit betrieben sind, wobei die zweite Heizeinrichtung (6") zuerst von der erwärmten Flüssigkeit durchströmt ist und anschließend die erste Heizeinrichtung (6') von der erwärmten Flüssigkeit durchströmt ist.

16. Motor nach Anspruch 14 oder 15, **dadurch gekennzeichnet, dass** der Gasspeicher (18) mit der ersten Heizeinrichtung (6') gekoppelt, vorzugsweise von dieser erwärmbar, ist und/oder dass in dem Gasspeicher aufgefangenes und über einen gesonderten Kreislauf (21) rückgeleitetes Treibgas mit Hilfe der ersten Heizeinrichtung (6') einem Verdampfungsvorgang zuführbar ist bzw. dass der gesonderte Kreislauf in die Leitung zwischen Pumpe (4) und Heizeinrichtung (6) mündet.

## Claims

1. A method for converting heat energy into a higher-value energy using a rotary vane piston motor (100) to which a working circuit for a working fluid is connected, **characterised in that**
- the rotary vane piston motor (100) comprises two vane-shaped pistons (41, 42) rotatably mounted on a shaft, from which the generated torque is accepted by a drive shaft (44), optionally via a gear unit (110) with non-round wheels (43),
- **in that** the working fluid emerging from the rotary vane piston motor (100) is liquefied in a cooling unit and/or in a condenser (2) and is supplied in the liquefied state, optionally via a collector (17) preferably provided with a filter, to a pressure pump (4) and is supplied from the latter via a heat exchanger (5) arranged in front of the cooling unit (2) for heat absorption, to a further heat exchanger (6) for heating and/or evaporation and is supplied from this further heat exchanger (6), optionally via an adjustable valve, in particular a sensor valve (7), in expanded form, to the chambers of the rotary vane piston motor (100) in order to move the pistons (41, 42), and
- **in that** the working fluid is liquefied in the condenser (2) and then subsequently evaporated again in the further heat exchanger (6), wherein
- Solkane ES36 or Solkatherm SES36 or a comparable organic working fluid is used as the working fluid, which is liquefied in the condenser (2) or the cooling unit and is subsequently evaporated again in the further heat exchanger (6),
- **in that** the pressure of the working fluid is set, directly
before (at 1') the rotary vane piston motor (100), to between 3 bar and 10 bar, in particular to between 6 bar and 10 bar,
directly after (at 2') the rotary vane piston motor (100), to between 0.4 bar and 0.8 bar, directly before (at 3') the condenser (2), to between 0.4 bar and 0.8 bar,
directly before (at 4') the pressure pump (4), to between 0.4 bar and 0.8 bar,
directly after (at 5') the pressure pump (4), to between 2 bar and 100 bar, preferably between 3 bar and 10 bar, in particular to between 6 bar and 10 bar,
directly after (at 6') the heat exchanger (5), to between 2 bar and 100 bar, preferably between 3 bar and 10 bar, in particular to between 0.4 bar and 0.8 bar,
directly after (at 1') the further heat exchanger (6), to between 3 bar and 10 bar, in particular to between 6 bar and 10 bar,
and
- **in that** the temperature of the working fluid is set
directly before (at 1') the rotary vane piston motor (100), to between 60°C and 180°C, in particular to between 100 and 140°C,
directly after (at 2') the rotary vane piston motor (1), to between 0°C and 70°C, in particular to between 20 and 40°C,
directly before (at 3') the condenser (2), to between 20 and 40°C,
directly before (at 4') the pressure pump (4), to between 0°C and 70°C, in particular to between 20 and 40°C,
directly after (at 5') the pressure pump (4), to between 0°C and 70°C,
directly after (at 6') the heat exchanger (5), to between 0°C and 70°C, in particular to between 20 and 40°C,
directly after (at 1') the further heat exchanger (6), to between 60°C and 180°C, in particular to between 100 and 140° C.

2. The method according to claim 1, **characterised in that** the working fluid is regulated and/or dispensed depressurised by the valve (7) located between the heat exchanger (6) and the rotary vane piston motor (100), and depending on the pressure of the working fluid after the rotary vane piston motor (100).

3. The method according to claim 1 or 2, **characterised in that** working fluid used has the chemical formula C₄H₅F₅/CF₃-O-(CF₂-CF(CF₃)-O)ₙ-(CF₂-O)ₘ-CF₃, where m and n are integers, and/or represents a mixture (65: 35) of 1,1,1,3,3-pentafluorbutane and 1,1,2,3,3,3-hexafluoro-1-propene, in particular oxidised and polymerised.

4. The method according to any one of claims 1 to 3, **characterised in that** CF₃CH₂CF₂CH₃ (perfluorpolyether) and/or CH₂FCF₃ and/or CF₃CHFCF₃ and/or CHF₂CH₂CF₃ and/or CF₃CH₂CF₂CH₃ is used as the working fluid.

5. The method according to any one of claims 1 to 4, **characterised in that** the working fluid is heated in the further heat exchanger (6), preferably by solar energy and/or by energy from solar collectors and/or from a solar plant and/or by energy from hot water sources or by waste heat.

6. The method according to any one of claims 1 to 5, **characterised in that** the pressure pump (4) is driven by electrical energy, which is taken from a generator (G) driven by the output shaft (4) of the rotary vane piston motor (100), and/or **in that** the generator (G) is cooled by the working fluid, which is taken from the working fluid circuit after the pressure pump (4) and before one of the heat exchangers (5 or 6), and returned into the working fluid circuit between the heat exchanger (5) and the further heat exchanger (6) or before the heat exchanger (5).

7. The method according to any one of claims 1 to 6, **characterised in that** a working fluid is used, which
has a boiling point (at 1 bar) between -150°C and 100°C, preferably between 30 and 50°C, in particular between 30 and 40°C,
has a critical temperature between 0°C and 500°C, preferably between 100°C and 300°C, in particular between 150 and 200°C,
has a critical pressure between 10 bar and 300 bar, preferably between 20 and 50 bar, in particular between 25 and 35
bar.

8. A rotary vane piston motor with a working fluid circuit containing a working fluid, for carrying out the method according to any one of claims 1 to 7, **characterised in that**
- the rotary vane piston motor (100) comprises two vane-shaped pistons (41, 42) rotatably mounted on a shaft, from which the generated torque is accepted by an output shaft (44), optionally via a gear unit (110) with non-round wheels (43),
- **in that** the a condenser or a cooling unit (2) is provided for cooling the working fluid emerging from the rotary vane piston motor (100) and the working fluid is supplied in the liquefied state, optionally via a collector (3) preferably comprising a filter, to a pressure pump (4) via a heat exchanger (5) arranged in front of the condenser or cooling unit (2) for heat absorption, to a further heat exchanger (6) for heating and/or evaporation, and is supplied from this further heat exchanger (6), via an, optionally adjustable valve, in particular a sensor valve (7), in expanded form, to the chambers (5, 6) of the rotary vane piston motor (100) in order to move the pistons (41, 42), and
- **in that** optionally Solkane ES36 or Solkatherm SES36 or a comparable working fluid is circulated in the working fluid circuit as working fluid, that is liquefied in the condenser (2) and subsequently evaporated again in the further heat exchanger (6), and
- **in that** a working fluid is supplied in the working fluid circuit of the rotary vane piston motor (100), which
has a boiling point (at 1 bar) between -150°C and 100°C, preferably between 30 and 50°C, in particular between 30 and 40°C,
has a critical temperature between 0°C and 500°C, preferably between 100°C and 300°C, in particular between 150 and 200°C,
has a critical pressure between 10 bar and 300 bar, preferably between 20 bar and 50 bar, in particular between 25 and 35 bar, or that uses a working fluid which has a boiling point (at 1 bar) between -75°C and 100°C, preferably between -30 and 50°C, in particular between -20 and 40 °C,
has a critical temperature between 0°C and 320°C, preferably between 100°C and 250°C, in particular between 150 and 200°C, and
has a critical pressure between 10 bar and 110 bar, preferably between 20 and 50 bar, in particular between 25 and 35 bar.

9. The rotary vane piston motor according to claim 8, **characterised in that** the valve (7), in particular sensor valve, is controlled according to the pressure of the working fluid after the rotary vane piston motor (100).

10. The rotary vane piston motor according to claim 8 or 9, **characterised in that** the further heat exchanger (6) is connected to solar energy collectors and/or waste heat sources or is designed as a solar energy collector.

11. The rotary vane piston motor according to any one of claims 8 to 10, **characterised in that** the cooling circuit of the generator (G) is fed with working fluid, which is taken from the working fluid circuit via a connection arranged after the pressure pump (4) and before one of the heat exchangers (5 or 6), and supplied into the working fluid circuit at a connection between the heat exchanger (5) and the heat exchanger (6) or before the heat exchanger (5).

12. The rotary vane piston motor (100) with two cylinders (41, 42) mounted to rotate in opposite directions in a cylinder (33), the symmetry axes of which extend co-linear with the symmetry axis of the cylinder (33), wherein a plurality of effective piston displacements (38, 39, 11, 12) is formed, each between two radial boundary surfaces (40, 50) of the two respective pistons (41, 42), which, when the motor is in operation (1), undergo an oscillating motion with respect to each other, wherein a device (110) is provided which ensures that the oscillating motion of the two pistons (41, 42) is superimposed on the circular motion, wherein the device (110) contains an output shaft (44) driven by a rotary power output device (35), e.g. a generator (G), and wherein a cooling unit (2), in particular a condenser, and a heating unit (6), in particular a heat exchanger, are provided connected to a pipe system, through which inlet slots (130, 130') and outlet slots (140, 140') of the piston displacements of the cylinder (33) are connected to each other, for carrying out the method according to any one of claims 1 to 7, **characterised in that**,
- the cooling unit or the condenser (2) is designed to liquefy a working fluid acting on the pistons (41, 42) and the heating unit or the heat exchanger (6) is designed to evaporate the liquefied propellant gas, and **in that** the pressure pump (4) is provided between the cooling unit (2) and the heating unit (6) in order to convey the liquefied working fluid, and
- **in that** a working fluid is supplied in the working fluid circuit of the rotary vane piston motor (100), which
has a boiling point (at 1 bar) between -150°C and 100°C, preferably between 30 and 50°C, in particular between 30 and 40°C,
has a critical temperature between 0°C and 500°C, preferably between 100°C and 300°C, in particular between 150 and 200°C,
has a critical pressure between 10 bar and 300 bar, preferably between 20 and 50 bar, in particular between 25 and 35 bar.

13. The motor according to any one of claims 8 to 12, **characterised in that** a liquid storage (17) is provided between the cooling unit (2) and the pump (4) which provides a liquid reservoir which is sufficiently large in order to match the performance of the pressure pump (4) to an actual demand and/or **in that** a gas storage (18) is provided between the heating unit (6) and the cylinder (33), inside of which a buffer wall is optionally provided for separating liquid residues which may become trapped or accumulated in the gas storage and can optionally be returned to the heating unit (6) via a separate circuit.

14. The motor according to any one of claims 8 to 13, **characterised in that** a first heating unit (6') and a second heating unit (6") are connected in series as the heating unit (6), wherein the first heating unit (6') of the liquefied working fluid is optionally heated to a first temperature level and the second heating unit (6") heats the in particular still liquefied working fluid to a second level, which is higher than the first level, wherein optionally one of the two heating units (6', 6") is operated by a liquid heated by means of a solar collector, and/or the second heating unit (6") is operated by a liquid heated by means of a solar collector, and/or the first heating unit (6') is operated by a liquid heated by means of a wood burner, oil burner or gas burner.

15. The motor according to claim 14, **characterised in that** both heating units are operated by a liquid heated by means of a solar collector, wherein the heated liquid flows first through the second heating device (6") and then the warmed liquid flows through the first heating unit (6').

16. The motor according to claim 14 or 15, **characterised in that** the gas storage (18) is coupled to the first heating unit (6') and can preferably be warmed by same, and **in that** propulsion gas trapped in the gas storage and returned via a separate circuit (21) can be supplied to an evaporation process by means of the first heating unit (6') or **in that** the separate circuit opens into the line between pump (4) and heating unit (6).

## Revendications

1. Procédé de conversion de l'énergie thermique en énergie valorisée à l'aide d'un moteur à palettes (100) auquel est raccordé un circuit de travail pour un fluide de travail, **caractérisé en**
- **ce que** le moteur à palettes (100) présente deux pistons (41, 42) conçus sous forme de palettes montées à rotation l'une contre l'autre sur un arbre, desquelles est extrait le couple de rotation produit, éventuellement au moyen d'une unité de transmission (110) dotée de roues excentriques (43), sur un arbre d'entraînement (44),
- **en ce que** le fluide de travail sortant du moteur à palettes (100) est liquéfié dans une unité de refroidissement ou dans un condensateur (2) et est amené, à l'état liquéfié, éventuellement par un collecteur (17) pourvu de préférence d'un filtre, à une pompe de refoulement (4) et de celle-ci par un échangeur de chaleur (5) pour l'absorption de chaleur monté en amont de l'unité de refroidissement (2) à un autre échangeur de chaleur (6) pour le chauffage ou l'évaporation et de cet autre échangeur de chaleur (6), éventuellement par une soupape réglable, notamment une soupape de détection (7), dans une forme expansée, aux chambres du moteur à palettes (100) pour mettre en mouvement les pistons (41, 42), et
- **en ce que** le fluide de travail est liquéfié dans le condensateur (2) et ensuite est de nouveau évaporé dans l'autre échangeur de chaleur (6), on prévoit
- que du Solkane ES36 ou du Solkatherm SES36 ou un autre fluide de travail organique comparable soit utilisé comme fluide de travail, qui est liquéfié dans le condensateur (2) ou dans l'unité de refroidissement et ensuite est de nouveau évaporé dans l'autre échangeur de chaleur (6),
- que la pression du fluide de travail soit réglée immédiatement
en amont (à 1') du moteur à palettes (100) entre 3 bars et 10 bars, en particulier entre 6 bars et 10 bars,
immédiatement en aval (à 2') du moteur à palettes (100) entre 0,4 bar et 0,8 bar,
immédiatement en amont (à 3') du condensateur (2) entre 0,4 bar et 0,8 bar,
immédiatement en amont (à 4') de la pompe de refoulement (4) entre 0,4 bar et 0,8 bar,
immédiatement en aval (à 5') de la pompe de refoulement (4) entre 2 bars et 100 bars, de préférence entre 3 bars et 10 bars, en particulier entre 6 bars et 10 bars,
immédiatement en aval (à 6') de l'échangeur de chaleur (5) entre 2 bars et 100 bars, de préférence entre 3 bars et 10 bars, notamment entre 0,4 bar et 0,8 bar,
immédiatement en aval (à 1') de l'autre échangeur de chaleur (6) entre 3 bars et 10 bars, en particulier entre 6 bars et 10 bars,
et
- la température du fluide de travail
immédiatement en amont (à 1') du moteur à palettes (100) entre 60°C et 180°C, en particulier entre 100 et 140°C,
immédiatement en aval (à 2') du moteur à palettes (1) entre 0°C et 70°C, en particulier entre 20 et 40°C,
immédiatement en amont (à 3') du condensateur (2) entre 20 et 40°C,
immédiatement en amont (à 4') de la pompe de refoulement (4) entre 0°C et 70°C, en particulier entre 20 et 40°C,
immédiatement en aval (à 5') de la pompe de refoulement (4) entre 0°C et 70°C,
immédiatement en aval (à 6') de l'échangeur de chaleur (5) entre 0°C et 70°C, en particulier entre 20 et 40°C,
immédiatement en aval (à 1') de l'autre échangeur de chaleur (6) entre 60°C et 180°C, en particulier entre 100 et 140°C.

2. Procédé selon la revendication 1, **caractérisé en ce que** le fluide de travail détendu est réglé ou dosé à l'aide de la soupape (7) disposée entre l'échangeur de chaleur (6) et le moteur à palettes (100) et notamment en fonction de la pression du fluide de travail en aval du moteur à palettes (100).

3. Procédé selon la revendication 1 ou 2, **caractérisé en ce que** le fluide de travail utilisé a la forme brute C₄H₅F₅/CF₃-O-(CF₂-CF(CF₃)-O)ₙ-(CF₂-O)ₘ-CF₃, m et n étant des nombres entiers et/ou représentent un mélange (65 : 35) de 1,1,1,3,3-pentafluorobutane et 1,1,2,3,3,3-hexafluoro-1-propène, en particulier oxydé et polymérisé.

4. Procédé selon l'une des revendications 1 à 3, **caractérisé en ce qu'**en tant que fluide de travail est utilisé le CF₃CH₂CF₂CH₃ (perfluoropolyéther) et/ou CH₂FCF₃ et/ou CF₃CHFCF₃ et/ou CHF₂CH₂CF₃ et/ou CF₃CH₂CF₂CH₃.

5. Procédé selon l'une des revendications 1 à 4, **caractérisé en ce que** le fluide de travail est chauffé dans l'autre échangeur de chaleur (6), de préférence à l'aide de l'énergie solaire et/ou de l'énergie provenant de collecteurs solaires et/ou provenant d'une installation solaire et/ou à l'aide de l'énergie provenant de sources d'eau chaude ou à l'aide de la chaleur résiduelle.

6. Procédé selon la revendication 1 à 5, **caractérisé en ce que** la pompe de refoulement (4) est entraînée par l'énergie électrique qui est extraite d'un générateur (G) entraîné par l'arbre de sortie (4) du moteur à palettes (100) et/ou **en ce que** le générateur (G) est refroidi par le fluide de travail, qui est extrait du circuit de fluide de travail en aval de la pompe de refoulement (4) et en amont de l'un des échangeurs de chaleur (5 ou 6), et réintroduit dans le circuit de fluide de travail entre l'échangeur de chaleur (5) et l'autre échangeur de chaleur (6) ou en amont de l'échangeur de chaleur (5).

7. Procédé selon l'une des revendications 1 à 6, **caractérisé en ce qu'**on utilise un fluide de travail dont
le point d'ébullition (à 1 bar) se situe entre -150°C et 100°C, de préférence entre 30 et 50°C, en particulier entre 30 et 40 °C,
dont la température critique se situe entre 0°C et 500°C, de préférence entre 100°C et 300°C, en particulier entre 150 et 200°C,
dont la pression critique se situe entre 10 bars et 300 bars, de préférence entre 20 et 50 bars, en particulier entre 25 et 35 bars.

8. Moteur à palettes comprenant un circuit de travail contenant un fluide de travail, destiné à exécuter le procédé selon l'une des revendications 1 à 7, **caractérisé en ce que**
- le moteur à palettes (100) comporte deux pistons (41, 42) conçus sous la forme de palettes montées à rotation l'une contre l'autre sur un arbre, desquelles est extrait le couple de rotation produit, éventuellement au moyen d'une unité de transmission (110) dotée de roues excentriques (43) sur un arbre de sortie (44),
- **en ce que** pour liquéfier le fluide de travail sortant du moteur à palettes (100) on utilise un condensateur ou une unité de refroidissement (2) et le fluide de travail est amené dans un état liquéfié, éventuellement à l'aide d'un collecteur (3) présentant de préférence un filtre à l'aide d'une pompe de refoulement (4) par l'intermédiaire d'un échangeur de chaleur (5) disposé en amont du condensateur ou de l'unité de refroidissement (2) pour l'absorption de la chaleur, à un autre échangeur de chaleur (6) pour le chauffage ou l'évaporation et de cet autre échangeur de chaleur (6) éventuellement par l'intermédiaire d'une soupape réglable (7), en particulier une soupape de détection, dans une forme expansée, aux chambres (5, 6) du moteur à palettes (100) pour mettre en mouvement les pistons (41, 42), et
- **en ce qu'**on fait éventuellement circuler dans le circuit de fluide de travail du Solkane ES36 ou Solkatherm SES36 ou un fluide de travail comparable comme fluide de travail qui est liquéfié dans le condensateur (2) et ensuite de nouveau évaporé dans l'autre échangeur de chaleur (6) et
- **en ce que** dans le circuit de fluide de travail du moteur à palettes (100) est introduit un fluide de travail, dont
le point d'ébullition se situe (à 1 bar) entre -150°C et 100°C, de préférence entre 30 et 50°C, en particulier entre 30 et 40°C,
dont la température critique se situe entre 0°C et 500°C, de préférence entre 100°C et 300°C, en particulier entre 150 et 200°C,
dont la pression critique se situe entre 10 bars et 300 bars, de préférence entre 20 bars et 50 bars, en particulier entre 25 et 35 bars, ou **en ce qu'**on utilise un fluide de travail dont le point d'ébullition (à 1 bar) se situe entre -75°C et 100°C, de préférence entre -30 et 50°C, en particulier entre -20 et 40 °C,
dont la température critique se situe entre 0°C et 320°C, de préférence entre 100°C et 250°C, en particulier entre 150 et 200°C, et
dont la pression critique se situe entre 10 bars et 110 bars, de préférence entre 20 et 50 bars, en particulier entre 25 et 35 bars.

9. Moteur à palettes selon la revendication 8, **caractérisé en ce que** la soupape (7), en particulier la soupape de détection, est commandée, en fonction de la pression du fluide de travail en aval du moteur à palettes (100).

10. Moteur à palettes selon la revendication 8 ou 9, **caractérisé en ce que** l'autre échangeur de chaleur (6) est raccordé aux collecteurs d'énergie solaire et/ou aux sources de chaleur résiduelle ou est conçu sous la forme de collecteur d'énergie solaire.

11. Moteur à palettes selon l'une des revendications 8 à 10, **caractérisé en ce que** le circuit de refroidissement du générateur (G) est alimenté en fluide de travail qui est prélevé par l'intermédiaire d'un raccordement disposé en aval de la pompe de refoulement (4) et en amont de l'un des échangeurs de chaleur (5 ou 6) et est réintroduit dans le circuit de fluide de travail dans un raccordement entre l'échangeur de chaleur (5) et l'échangeur de chaleur (6) ou en amont de l'échangeur de chaleur (5).

12. Moteur à palettes (100) comprenant deux pistons (41, 42) montés à rotation l'un contre l'autre dans un cylindre (33) dont les axes de symétrie s'étendent collinéairement avec l'axe de symétrie du cylindre (33), une pluralité de cylindrées effectives (38, 39, 11, 12) est conçue entre respectivement deux surfaces limites radiales (40, 50) des deux pistons respectifs (41, 42) qui réalisent lors du fonctionnement du moteur (1) un mouvement d'oscillation l'un par rapport à l'autre, un dispositif (110) amenant le mouvement d'oscillation des deux pistons (41, 42) à superposer le mouvement circulaire, le dispositif (110) contenant un arbre de sortie (44) entraînant un dispositif de distribution de couple (35), par exemple un générateur (G) et une unité de refroidissement (2), en particulier un condensateur, et un dispositif de chauffage (6), en particulier un échangeur de chaleur, sont en communication avec un système de conduits, qui relie les unes avec les autres des fentes d'admission (130, 130') et des fentes de sortie (140, 140') des cylindrées du cylindre (33), pour exécuter le procédé selon l'une des revendications 1 à 7, **caractérisé en ce que**
- l'unité de refroidissement ou le condensateur (2) est conçu pour liquéfier un fluide de travail agissant sur les pistons (41, 42) et le dispositif de chauffage ou l'échangeur de chaleur (6) est conçu pour faire évaporer le gaz propulseur liquéfié et **en ce qu'**entre l'unité de refroidissement (2) et le dispositif de chauffage (6) est disposée la pompe de refoulement (4) pour acheminer le fluide de travail liquéfié et
- **en ce que** dans le circuit de fluide de travail du moteur à palettes (100) est introduit un fluide de travail, dont
le point d'ébullition se situe (à 1 bar) entre -150°C et 100°C, de préférence entre 30 et 50°C, en particulier entre 30 et 40°C,
dont la température critique se situe entre 0°C et 500°C, de préférence entre 100°C et 300°C, en particulier entre 150 et 200°C,
dont la pression critique se situe entre 10 bars et 300 bars, de préférence entre 20 et 50 bars, en particulier entre 25 et 35 bars.

13. Moteur selon l'une des revendications 8 à 12, **caractérisé en ce qu'**entre l'unité de refroidissement (2) et la pompe (4) est disposé un dispositif de stockage de liquide (17) qui fournit un réservoir de liquide, qui est suffisamment grand pour adapter la puissance de la pompe de refoulement (4) à un besoin réel respectif et/ou **en ce qu'**entre le dispositif de chauffage (6) et le cylindre (33) est disposé un dispositif de stockage de gaz (18) qui comprend en son sein éventuellement une paroi tampon pour isoler des résidus de liquide qui peuvent être recueillis et collectés dans le dispositif de stockage de gaz et éventuellement être retournés dans le dispositif de chauffage (6) par l'intermédiaire d'un circuit séparé.

14. Motor selon l'une des revendications 8 à 13, **caractérisé en ce qu'**en tant que dispositif de chauffage (6) un premier dispositif de chauffage (6') et un second dispositif de chauffage (6") sont montés en série l'un derrière l'autre, éventuellement le premier dispositif de chauffage (6') chauffant le fluide de travail liquéfié à un premier niveau de température et le second dispositif de chauffage (6") chauffant le fluide de travail encore liquéfié à un second niveau supérieur au premier niveau, éventuellement l'un des deux dispositifs de chauffage (6', 6") fonctionnant par un fluide de travail chauffé au moyen d'un collecteur solaire et/ou le second dispositif de chauffage (6") fonctionne par un liquide chauffé au moyen d'un collecteur solaire et/ou le premier dispositif de chauffage (6') fonctionne par un liquide chauffé au moyen d'un brûleur à gaz, à mazout ou à bois.

15. Moteur selon la revendication 14, **caractérisé en ce que** les deux dispositifs de chauffage fonctionnent par un liquide chauffé au moyen d'un collecteur solaire, le second dispositif de chauffage (6") étant d'abord parcouru par le liquide chauffé et ensuite le premier dispositif de chauffage (6') étant parcouru par le liquide chauffé.

16. Moteur selon la revendication 14 ou 15, **caractérisé en ce que** le dispositif de stockage de gaz (18) est raccordé au premier dispositif de chauffage (6'), chauffé de préférence par celui-ci et/ou **en ce que** le gaz propulseur recueilli et renvoyé par un circuit séparé (21) dans le dispositif de stockage de gaz est introduit au moyen du premier dispositif de chauffage (6') dans un processus d'évaporation ou **en ce que** le circuit séparé débouche dans la conduite entre la pompe (4) et le dispositif de chauffage (6).
